# DEMANDE DE BREVET EUROPEEN

(11) **EP 4 755 809 A1**
(43) Date de publication de la demande: **10.06.2026**
(21) Numéro de dépôt: 24217404.3
(22) Date de dépôt: 04.12.2024
(51) Int. Cl.: B65B 5/06, B65B 25/02, B65B 35/44, B65B 43/46, B65B 43/54, B65B 43/56, B65B 59/00, A01G 9/08, A01C 11/02

(54) **DISPOSITIF DE CONDITIONNEMENT DE MOTTES**

(71) Demandeur: Hortivision, 47220 Fals (FR)
(72) Inventeur: RAMIS, Pierre, 47220 CAUDECOSTE (FR); RAMIS, Gael, 47220 FALS (FR)
(74) Mandataire: Aquinov

(57) **Abrégé**

L'invention a pour objet un dispositif de conditionnement (1) de mottes végétales comportant un premier convoyeur (10) et un deuxième convoyeur (11) agencés pour coopérer ensemble ; le premier convoyeur (10) étant adapté pourfournir au moins un ensemble de mottes, le deuxième convoyeur (11) étant adapté pour fournir au moins un moyen de conditionnement (110) dont au moins une première paroi latérale comporte un perçage (110.1) orienté dans une direction compatible avec une direction de déplacement de l'ensemble de mottes sur le premier convoyeur (10) ; un moyen de déplacement (12) comportant un organe de maintien (120) adapté pour maintenir le moyen de conditionnement (12) de sorte que l'orientation dudit moyen de conditionnement (12) soit identique dans un déplacement sur le deuxième convoyeur (11) et dans un déplacement depuis le deuxième convoyeur (11) vers le premier convoyeur (10) de sorte que le perçage (110.1) coopère avec l'ensemble de mottes.

## Description

### Domaine technique

L'invention se rapporte au domaine technique des dispositifs de conditionnement et notamment les dispositifs de conditionnement adaptés à l'industrie agricole et/ou horticole.

### Etat de la technique

Actuellement dans le domaine de l'horticulture, les mottes de terre sont pressées puis remplies avec des semis, les mottes peuvent également comporter un trou pour être prêtes à recevoir des boutures. La mise en motte est automatique ainsi que l'insertion des semis dans lesdites mottes en utilisant une motteuse pour former un ensemble de mottes.

Les caisses adaptées pour recevoir les mottes pour leur conditionnement sont bien connues de l'homme du métier puisqu'elles sont spécifiques à ce type de conditionnement. En effet, ces caisses comportent une pluralité de parois latérales verticales et une paroi supérieure ouverte. L'une des parois latérales comporte un perçage.

Lorsque les mottes comportant les semis sortent de la motteuse, un opérateur muni d'une fourche spécifique vient prendre l'ensemble de mottes et le déplacer manuellement pour l'insérer dans la caisse en passant par le perçage.

Ces opérations nécessitent donc du temps, beaucoup de manutention manuelle et l'opérateur doit disposer d'une condition physique adaptée pour pouvoir suivre la cadence.

L'invention se place donc dans ce contexte et cherche à résoudre l'ensemble des inconvénients précités. Ainsi, l'invention cherche à proposer un dispositif adapté pour limiter les manutentions manuelles de mise en caisse et facilitant le suivi de cadence de préparation des mottes tout en préservant leur intégrité, c'est-à-dire en évitant de les déformer pendant l'opération de mise en conditionnement.

### Présentation de l'invention.

L'invention a pour objet un dispositif de conditionnement de mottes végétales comportant un premier convoyeur et un deuxième convoyeur agencés pour coopérer ensemble, le premier convoyeur étant adapté pour fournir au moins un ensemble de mottes végétales, le deuxième convoyeur étant adapté pour fournir au moins un moyen de conditionnement dont au moins une première paroi latérale comporte un perçage orienté dans une direction compatible avec une direction de déplacement de l'ensemble de mottes sur le premier convoyeur ; un moyen de déplacement comportant un organe de maintien adapté pour maintenir le moyen de conditionnement de sorte que l'orientation dudit moyen de conditionnement soit identique dans un déplacement sur le deuxième convoyeur et dans un déplacement depuis le deuxième convoyeur vers le premier convoyeur de sorte que le perçage de la première paroi latérale coopère avec l'ensemble de mottes.

Le terme convoyeur peut englober tout dispositif ou système permettant le déplacement d'objets ou de matériaux d'un point à un autre de manière continue. Par exemple le convoyeur peut comporter des tapis roulants, des bandes transporteuses ou d'autres mécanismes similaires.

Le premier convoyeur peut comporter au moins une première extrémité montée du côté du deuxième convoyeur et une deuxième extrémité opposée de sorte que l'ensemble de mottes végétales soit déplacé depuis la deuxième extrémité vers la première extrémité. Dans un mode de réalisation, le premier convoyeur peut permettre un approvisionnement continu d'ensemble de mottes.

On entend par motte, toute motte de terre qui peut comporter une plante, qu'il s'agisse d'un semi, d'une bouture ou d'une plante plus mature, sans distinction particulière. Ce terme peut donc englober tous les types de mottes contenant des racines et un substrat végétal.

Le deuxième convoyeur peut comporter une première portion, une deuxième portion et une troisième disposées en continuité l'une de l'autre, de sorte que le moyen de conditionnement soit déplacé sur la première portion puis sur la deuxième portion puis sur la troisième portion.

Le premier et le deuxième convoyeur peuvent être agencés pour coopérer ensemble. Par exemple, la première extrémité du premier convoyeur peut être positionné à proximité de la deuxième partie du deuxième convoyeur. On entend par à proximité, le fait que la première extrémité du premier convoyeur et la deuxième partie du deuxième convoyeur puissent se chevaucher.

Le moyen de conditionnement peut être une caisse comportant une pluralité de parois latérales et dont l'une de ces parois comporte un perçage. Le perçage est orienté dans une direction compatible avec la direction de déplacement de l'ensemble de mottes sur le premier convoyeur. Cette configuration peut permettre de faciliter l'insertion des mottes végétales provenant du premier convoyeur directement dans le moyen de conditionnement. Cette configuration peut notamment permettre d'assurer une correspondance optimale entre le mouvement de l'ensemble de mottes sur le premier convoyeur et leur transfert dans le moyen de conditionnement. Il est ainsi possible de permettre de réduire le temps de manipulation et limiter la manutention.

Ainsi, le moyen de conditionnement peut emprunter une configuration vide lorsqu'elle se déplace sur la première portion du deuxième convoyeur et une configuration pleine lorsqu'elle est sur le premier convoyeur mais également lorsqu'elle se déplace sur la troisième partie du deuxième convoyeur.

Le dispositif comporte un moyen de déplacement comportant un organe de maintien adapté pour garantir le maintien et/ou la stabilisation du moyen de conditionnement dans une position de sorte que son orientation reste identique lors de son déplacement sur le premier convoyeur mais également depuis le premier convoyeur vers le deuxième convoyeur. Ainsi le fait que le moyen de déplacement puisse permettre de maintenir l'orientation du moyen de conditionnement peut permettre d'assurer sur le perçage de la première paroi latérale du moyen de conditionnement reste toujours aligné avec l'ensemble de mottes végétales et faciliter leur insertion.

Le moyen de déplacement peut comporter une unité de contrôle adaptée pour coordonner le mouvement du premier convoyeur, du deuxième convoyeur et dudit moyen de déplacement.

L'orientation du moyen de conditionnement peut être cruciale puisque c'est grâce à son maintien dans cette position qu'il peut être possible d'insérer les mottes végétales dans ledit moyen de conditionnement en réduisant les risques d'endommagement des mottes mais également des plantes qu'elles peuvent comporter. C'est-à-dire que le fait de maintenir le moyen de conditionnement peut permettre la conservation de son alignement avec l'ensemble de mottes.

Le moyen de déplacement peut ainsi permettre d'optimiser le temps de fonctionnement en permettant d'éliminer une étape de réorientation du moyen de conditionnement et donc de limiter les risques d'erreurs liés à une mauvaise orientation du moyen de conditionnement lorsque celui-ci est déplacé en direction du premier convoyeur.

C'est l'utilisation du moyen de déplacement comportant un organe de maintien qui peut permettre de garantir le remplissage optimal du moyen de conditionnement.

Grâce à l'invention, et notamment grâce à l'utilisation d'un moyen de déplacement comportant un organe de maintien adapté pour maintenir le moyen de conditionnement de sorte que l'orientation dudit moyen de conditionnement soit identique et de sorte que le perçage de la première paroi latérale coopère avec l'ensemble de mottes, il est possible de simplifier la mise en caisse d'un ensemble de mottes tout en préservant l'intégrité des mottes lors de leur mise en conditionnement. Cette invention permet de limiter l'implication humaine et d'ainsi diminuer la pénibilité de cette tâche. Le dispositif permet également une production plus rapide, tout en minimisant les risques d'endommagement des plantes. Ainsi, le système de mise en caisse peut permettre de garantir le dépôt d'un ensemble de mottes dans le moyen de conditionnement en suivant la cadence de délivrance dudit moyen de conditionnement. La vitesse de mouvement de l'ensemble de mottes peut donc correspondre à la vitesse de mouvement du moyen de conditionnement.

Avantageusement, l'organe de maintien comporte une mâchoire agencée pour emprunter une configuration ouverte et une configuration fermée dans laquelle ledit organe de maintien coopère avec le moyen de conditionnement.

La taille de la mâchoire peut être réglable afin de s'adapter à une pluralité de tailles de moyens de conditionnement.

L'organe de maintien peut emprunter la configuration ouverte corrélée avec un déplacement du moyen de conditionnement sur le deuxième convoyeur.

L'organe de maintien peut emprunter la configuration fermée corrélée avec le déplacement du moyen de conditionnement depuis le deuxième convoyeur vers le premier convoyeur. Dans la configuration fermée, l'organe de maintien peut coopérer étroitement avec le moyen de conditionnement. La configuration fermée peut assurer un maintien ferme et sécurisé du moyen de conditionnement pendant les déplacements mais également pendant l'insertion des mottes dans ledit moyen de conditionnement.

L'unité de contrôle présente dans le moyen de déplacement peut permettre de contrôler le passage de la configuration ouverte à la configuration fermée et de la configuration fermée à la configuration ouverte.

Dans un autre mode de réalisation, l'organe de maintien peut comporter un mécanisme de verrouillage magnétique.

Dans un autre mode de réalisation, l'organe de maintien pourrait comporter une pluralité de mâchoires adaptées pour chacune déplacer un moyen de conditionnement associés à une pluralité de premier convoyeur montés en parallèles les uns des autres. Dans ce mode de réalisation chaque mâchoire est associée respectivement à son premier convoyeur.

Avantageusement, le moyen de déplacement comporte un organe de coupe adapté pour couper l'ensemble de mottes.

Le moyen de déplacement comporte un organe de coupe spécifiquement adapté pour sectionner l'ensemble de mottes à des dimensions correspondant au moyen de conditionnement.

L'organe de coupe peut être configuré pour coopérer avec une face interne de la paroi latérale du moyen de conditionnement comportant le perçage. L'organe de coupe peut être configuré pour couper l'ensemble de mottes entre deux mottes, de manière à ne pas abimer lesdites mottes. L'utilisation de l'organe de coupe peut permettre une séparation efficace et précise des mottes à partir de l'ensemble de mottes initial.

Enfin, l'intégration de l'organe de coupe au moyen de déplacement peut permettre de créer un système compact et efficace, optimisant l'espace et les ressources.

Avantageusement, le moyen de déplacement comporte un organe de retenue adapté pour coopérer avec l'organe de coupe.

La coopération de l'organe de retenue avec l'organe de coupe peut permettre de maintenirfermement en place l'ensemble de mottes pendant l'opération de coupe. Cette caractéristique peut permettre de réduire les risques de mouvements et d'écrasement des mottes par l'organe de coupe lors du déplacement du moyen de conditionnement en configuration pleine. En effet, une fois que l'organe de coupe a coupé l'ensemble de mottes, le moyen de déplacement déplace le moyen de conditionnement du premier convoyeur vers le deuxième convoyeur et notamment vers sa deuxième partie. Ce déplacement pourrait entraîner un écrasement des mottes du fait des forces opposées qui s'appliquent sur lesdites mottes. Dès lors il est possible d'assurer une coupe précise et sûre ce qui peut également se traduire par une réduction du temps nécessaire pour effectuer la coupe et une diminution de l'effort requis, augmentant ainsi l'efficacité globale du processus.

Avantageusement, le moyen de conditionnement comporte une face supérieure ouverte adaptée pour coopérer avec un organe de retenue.

La face supérieure ouverte du moyen de conditionnement peut permettre d'accéder aisément à son contenu. Lors de la découpe de l'ensemble de mottes, l'organe de retenue peut ainsi facilement maintenir les mottes dans le moyen de conditionnement lors de la découpe.

Avantageusement, le moyen de déplacement comporte un système d'entrainement adapté pour contrôler l'organe de coupe et l'organe de retenue.

Le système d'entrainement peut être adapté pour contrôler l'organe de coupe et l'organe de retenue. Le système d'entrainement peut permettre d'obtenir une coordination précise des mouvements de l'organe de coupe et de l'organe de retenue.

Le système d'entrainement peut comporter au moins un moteur, couplé à des mécanismes de transmission tels que des engrenages, des courroies, des cames ou des vérins. Le système peut inclure des capteurs de position et de force pour assurer un contrôle précis des mouvements et des actions de l'organe de coupe et de l'organe de retenue.

Avantageusement, le système d'entrainement est configuré pour entraîner simultanément le déplacement de l'organe de coupe et de l'organe de retenue depuis une position haute vers une position basse.

Dans ce mode de réalisation, lorsque le système d'entrainement entraine le déplacement de l'organe de coupe de la position haute vers la position basse, celui-ci peut entraîner simultanément le déplacement de l'organe de retenue. Ainsi, le mouvement de l'organe de coupe et le mouvement de l'organe de retenue sont corrélés.

Inversement, lors du passage de la position basse vers la position haute le système d'entrainement entraine le déplacement de l'organe de coupe simultanément au déplacement de l'organe de retenue.

Le système d'entrainement peut comporter un arbre commun, des cames synchronisées, ou un système de contrôle électronique coordonnant les mouvements de moteurs séparés.

Des butées mécaniques ou des capteurs de fin de course peuvent être utilisés pour définir précisément les positions haute et basse reconnues par le système d'entrainement.

Avantageusement, le système d'entrainement est configuré pour entraîner successivement le déplacement de l'organe de coupe puis le déplacement de l'organe de retenue de la position haute vers la position basse.

Dans ce mode de réalisation, le système d'entrainement entraine de manière séquentielle le déplacement de l'organe de coupe de la position haute vers la position basse puis le déplacement de l'organe de retenue. Ainsi, le mouvement de l'organe de coupe et le mouvement de l'organe de retenue sont successifs.

Inversement, lors du passage de la position basse vers la position haute le système d'entrainement entraine de manière séquentielle le déplacement de l'organe de coupe puis le déplacement de l'organe de retenue. Ainsi, le mouvement de l'organe de coupe et le mouvement de l'organe de retenue sont successifs.

Le système d'entraînement de ce mode de réalisation peut comporter des cames à profils différents, un système de vérins à activation temporisée, ou encore un contrôle électronique programmé pour déclencher les mouvements dans un ordre précis.

Le système peut inclure des capteurs de position pour assurer que le mouvement de l'organe de retenue ne commence qu'une fois que l'organe de coupe a atteint une certaine position ou a terminé son action.

Un autre aspect de l'invention concerne un procédé de conditionnement de mottes végétales mis en oeuvre par un dispositif et comportant les étapes suivantes : fourniture de l'ensemble de mottes végétales depuis le premier convoyeur; fourniture du moyen de conditionnement depuis le deuxième convoyeur orienté dans une direction dans laquelle le perçage est compatible avec la direction de déplacement de l'ensemble de mottes sur le premier convoyeur; passage de l'organe de maintien de la configuration ouverte à la configuration fermée.

L'ensemble de mottes peut être déplacé de la deuxième extrémité vers la première extrémité du premier convoyeur de manière continue. Les moyens de conditionnement peuvent être fournis successivement sur la première partie du deuxième convoyeur dans une orientation dans laquelle le perçage est compatible avec la direction de déplacement de l'ensemble de mottes sur le premier convoyeur. Lorsque le moyen de conditionnement atteint la deuxième partie du deuxième convoyeur, l'organe de maintien du moyen de déplacement passe de la configuration ouverte à la configuration fermée afin d'assurer le maintien du moyen de conditionnement.

Avantageusement, le procédé comporte une étape de déplacement du moyen de conditionnement par le moyen de déplacement depuis le deuxième convoyeur vers le premier convoyeur de sorte que l'ensemble de motte soit insérée dans ledit moyen de conditionnement par le perçage.

Une fois que l'organe de maintien est passé en configuration fermée pour maintenir le moyen de conditionnement, le moyen de déplacement entraine le déplacement du moyen de conditionnement depuis le deuxième convoyeur vers la première extrémité du premier convoyeur. Le déplacement du moyen de conditionnement peut être réalisé de manière opposée au déplacement de l'ensemble de mottes de sorte que ledit ensemble de mottes rentre dans ledit moyen de conditionnement par le perçage.

Avantageusement, le procédé comporte une étape d'activation du système d'entrainement pour déplacer simultanément l'organe de coupe et l'organe de retenue de la position haute à la position basse.

Dans ce mode de réalisation, lorsque l'ensemble de mottes a rempli le moyen de conditionnement, le système d'entrainement peut être activé de manière à déplacer simultanément l'organe de coupe et l'organe de retenue depuis la position haute vers la position basse et ce, pour couper l'ensemble de mottes à la dimension adaptée audit moyen de conditionnement.

Avantageusement, le procédé comporte une étape d'activation du système d'entrainement pour déplacer successivement l'organe de coupe puis l'organe de retenue de la position haute à la position basse.

Dans ce mode de réalisation, lorsque l'ensemble de mottes a rempli le moyen de conditionnement, le système d'entrainement peut être activé de manière à déplacer séquentiellement l'organe de coupe puis l'organe de retenue depuis la position haute vers la position basse et ce, pour couper l'ensemble de mottes à la dimension adaptée audit moyen de conditionnement.

Avantageusement, le procédé comporte une étape de déplacement du moyen de conditionnement du premier convoyeur vers le deuxième convoyeur par le moyen de déplacement.

Lorsque l'ensemble de mottes est coupé, le moyen de déplacement peut déplacer le moyen de conditionnement depuis la première extrémité du premier convoyeur vers la deuxième partie du deuxième convoyeur.

Avantageusement, le procédé comporte une étape de d'activation du système d'entrainement pour déplacer simultanément l'organe de coupe et l'organe de retenue de la position basse à la position haute.

Une fois que le moyen de conditionnement est dans une configuration pleine sur le premier convoyeur, le système d'entrainement peut être activé de manière à déplacer simultanément l'organe de coupe et l'organe de retenue depuis la position basse vers la position haute de manière à libérer l'organe de coupe en évitant de déplacer l'ensemble de mottes avec ledit organe de coupe.

Avantageusement, le procédé comporte une étape de passage de l'organe de maintien de la configuration fermée à la configuration ouverte.

L'organe de maintient peut ensuite passer de la configuration fermée à la configuration ouverte de manière à laisser le moyen de conditionnement se déplacer sur la troisième partie du deuxième convoyeur.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :

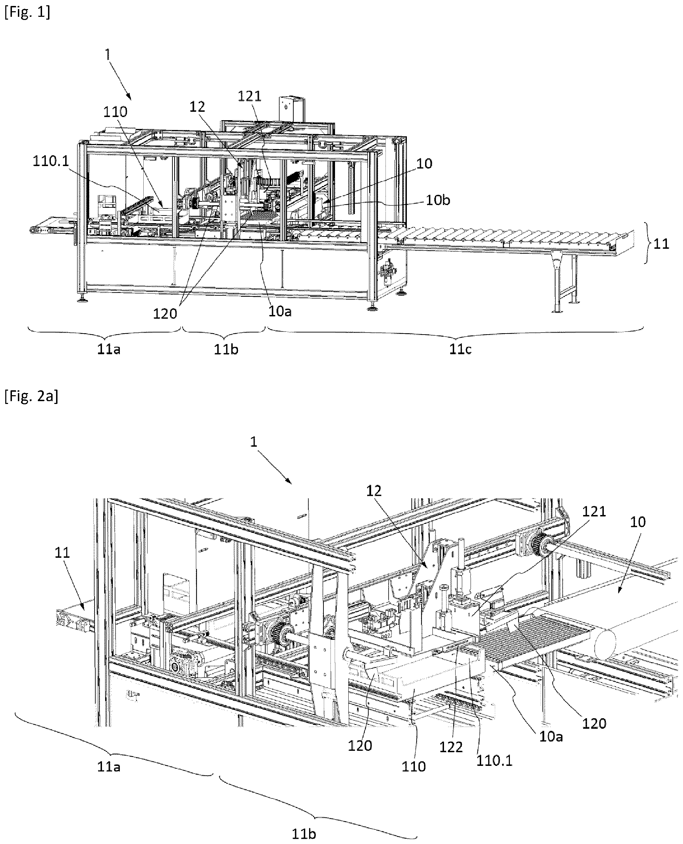

[Fig. 1] représente schématiquement une vue en perspective d'un dispositif dans une configuration dans laquelle un moyen de conditionnement en configuration vide se déplace sur une première partie d'un deuxième convoyeur selon un mode de réalisation.
[Fig. 2a] représente schématiquement une vue en perspective d'une portion d'un dispositif dans une configuration dans laquelle un moyen de conditionnement en configuration vide est sur une deuxième portion d'un deuxième convoyeur et dans laquelle un organe de maintien est en position ouverte selon un mode de réalisation.

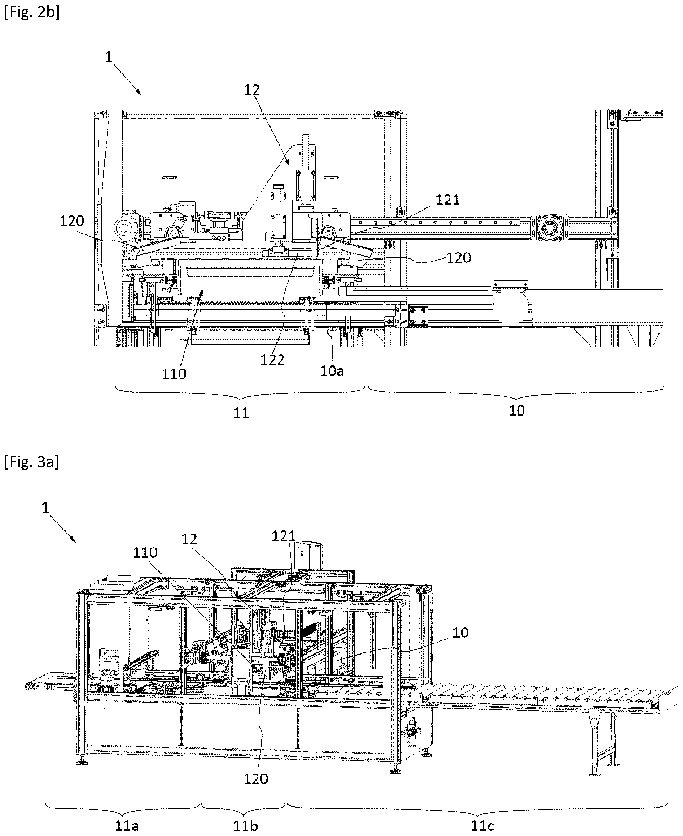

[Fig. 2b] représente schématiquement une vue de profil d'une portion d'un dispositif dans une configuration dans laquelle un moyen de conditionnement en configuration vide est sur une deuxième portion d'un deuxième convoyeur et dans laquelle un organe de maintien est en position ouverte selon un mode de réalisation.
[Fig. 3a] représente schématiquement une vue en perspective d'un dispositif dans une configuration dans laquelle un moyen de conditionnement en configuration vide est sur une deuxième portion d'un deuxième convoyeur et dans laquelle un organe de maintien est en position fermée selon un mode de réalisation.

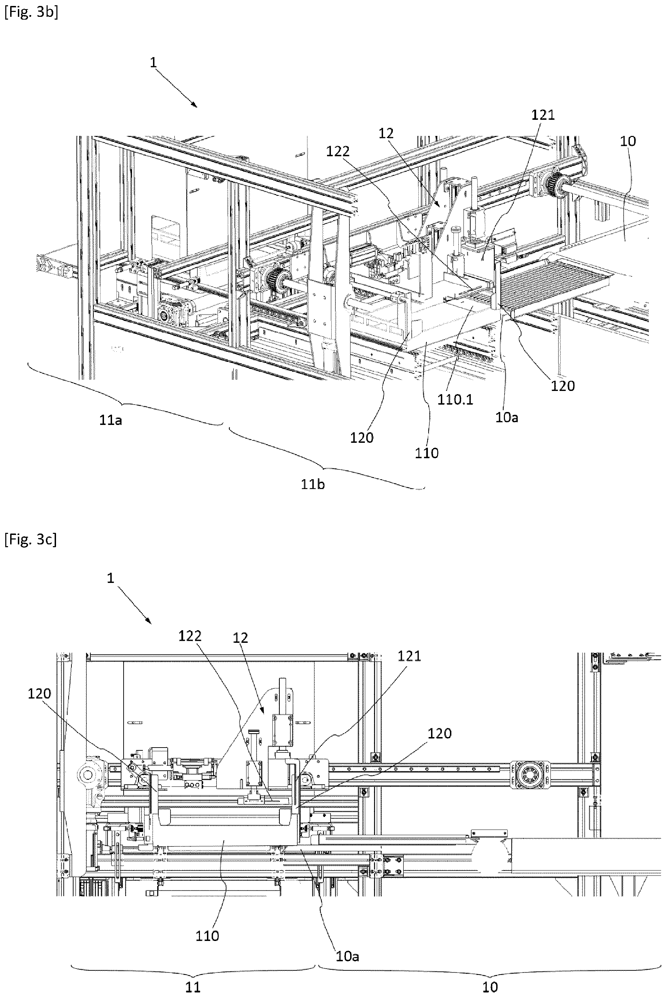

[Fig. 3b] représente schématiquement une vue en perspective d'une portion d'un dispositif dans une configuration dans laquelle un moyen de conditionnement en configuration vide est sur une deuxième portion d'un deuxième convoyeur et dans laquelle un organe de maintien est en position fermée selon un mode de réalisation.
[Fig. 3c] représente schématiquement une vue de profil d'une portion d'un dispositif dans une configuration dans laquelle un moyen de conditionnement en configuration vide est sur une deuxième portion d'un deuxième convoyeur et dans laquelle un organe de maintien est en position fermée selon un mode de réalisation.

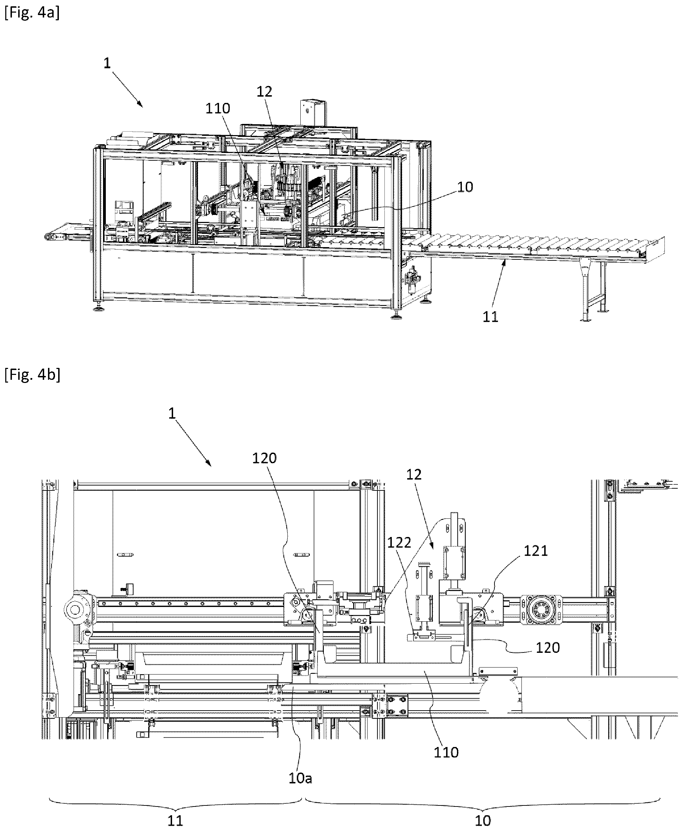

[Fig. 4a] représente schématiquement une vue en perspective d'un dispositif dans une configuration dans laquelle un moyen de conditionnement en configuration vide se déplace depuis une deuxième portion d'un deuxième convoyeur vers une première extrémité du premier convoyeur et dans laquelle un organe de coupe et un organe de retenue sont en position haute selon un mode de réalisation.
[Fig. 4b] représente schématiquement une vue de profil d'une portion d'un dispositif dans une configuration dans laquelle un moyen de conditionnement en configuration vide se déplace depuis une deuxième portion d'un deuxième convoyeur vers une première extrémité du premier convoyeur et dans laquelle un organe de coupe et un organe de retenue sont en position haute selon un mode de réalisation.

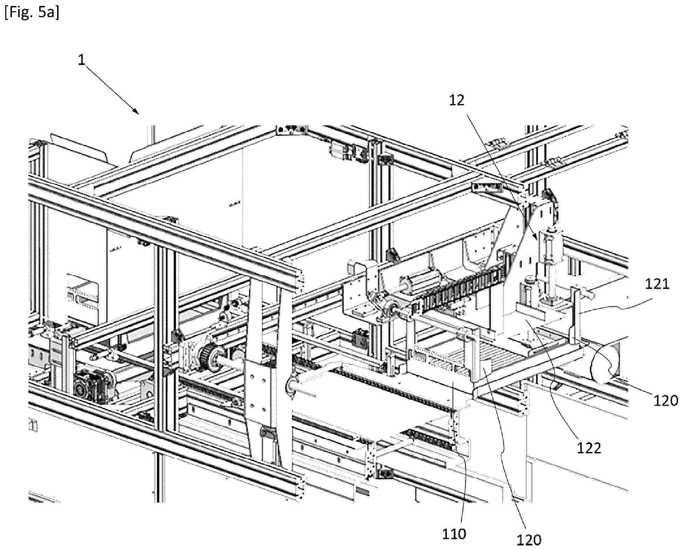

[Fig. 5a] représente schématiquement une vue en perspective d'une portion d'un dispositif dans une configuration dans laquelle un moyen de conditionnement en configuration pleine est sur une première extrémité du premier convoyeur et dans laquelle un organe de coupe et un organe de retenue sont en position basse selon un mode de réalisation.

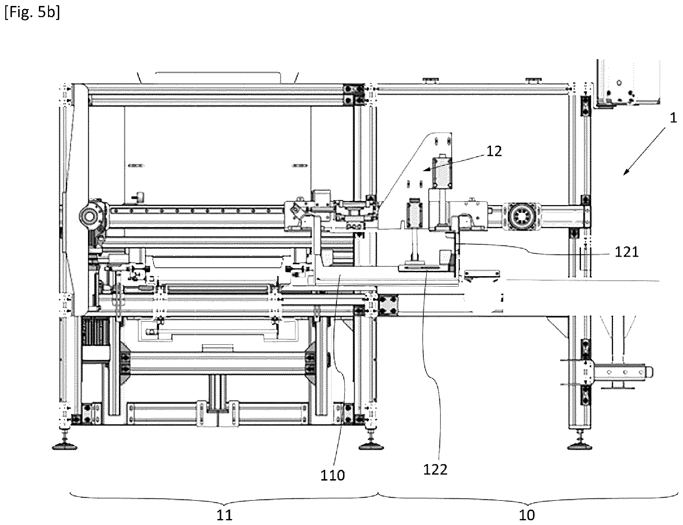

[Fig. 5b] représente schématiquement une vue de profil d'une portion d'un dispositif dans une configuration dans laquelle un moyen de conditionnement en configuration pleine est sur une première extrémité du premier convoyeur et dans laquelle un organe de coupe et un organe de retenue sont en position basse selon un mode de réalisation.

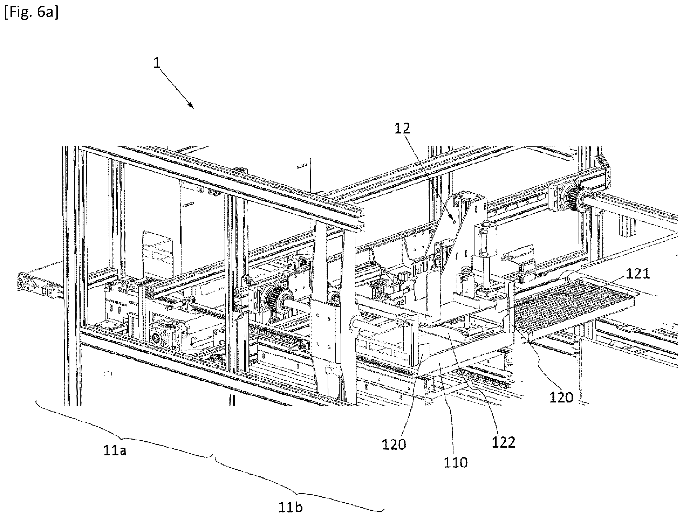

[Fig. 6a] représente schématiquement une vue en perspective d'une portion d'un dispositif dans une configuration dans laquelle un moyen de conditionnement en configuration pleine se déplace depuis une première extrémité du premier convoyeur vers une deuxième portion d'un deuxième convoyeur et dans laquelle un organe de coupe et un organe de retenue sont en position basse selon un mode de réalisation.

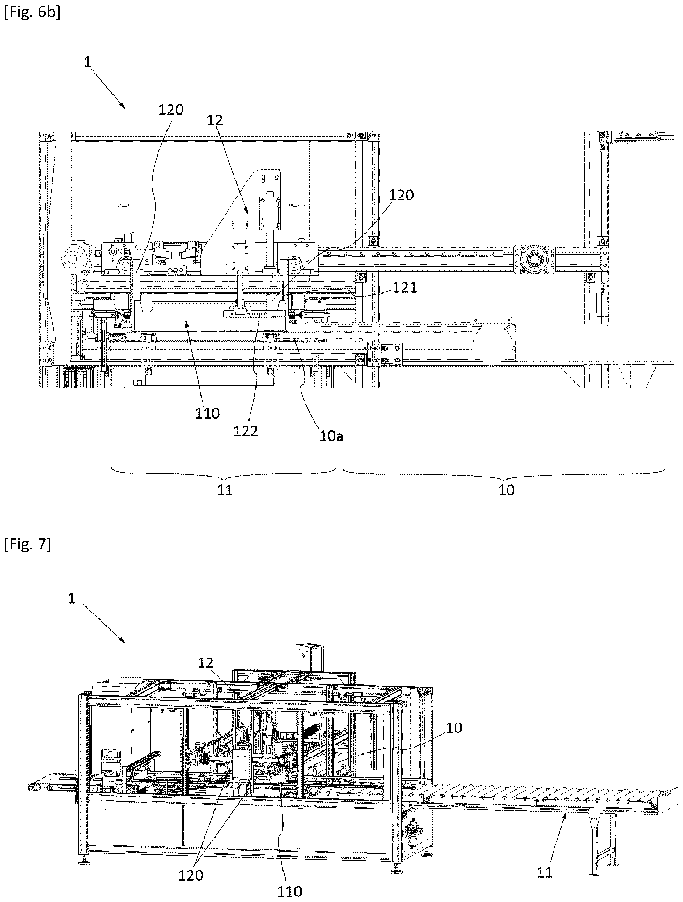

[Fig. 6b] représente schématiquement une vue de profil d'une portion d'un dispositif dans une configuration dans laquelle un moyen de conditionnement en configuration pleine se déplace depuis une première extrémité du premier convoyeur vers une deuxième portion d'un deuxième convoyeur et dans laquelle un organe de coupe et un organe de retenue sont en position basse selon un mode de réalisation.
[Fig. 7] représente schématiquement une vue en perspective d'un dispositif dans une configuration dans laquelle un moyen de conditionnement en configuration pleine est sur une deuxième portion d'un deuxième convoyeur et dans laquelle un organe de maintien est en position ouverte selon un mode de réalisation.

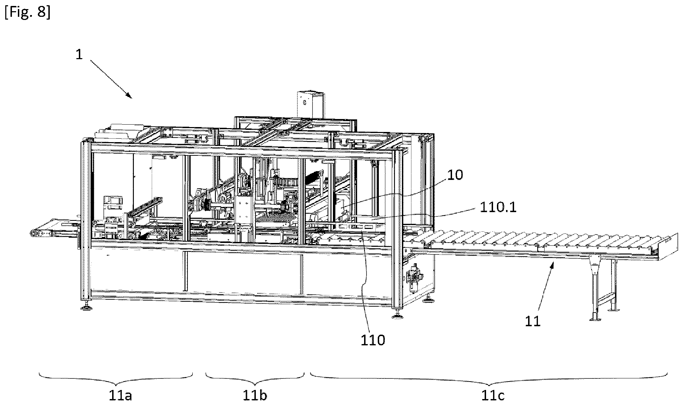

[Fig. 8] représente schématiquement une vue en perspective d'un dispositif dans une configuration dans laquelle un moyen de conditionnement en configuration pleine se déplace sur une troisième partie d'un deuxième convoyeur selon un mode de réalisation

Dans la description qui suit, les éléments identiques, par structure ou par fonction, apparaissant sur différentes figures conservent, sauf précision contraire, les mêmes références.

### Description d'un mode de réalisation.

On a représenté en [Fig. 1] une vue en perspective d'un dispositif 1 selon un mode de réalisation. Le dispositif 1 est également décrit en lien avec les [Fig. 2a], [Fig. 2b], [Fig. 3a], [Fig. 3b], [Fig. 3c], [Fig. 4a], [Fig. 4b], [Fig. 5a], [Fig. 5b], [Fig. 6a], [Fig. 6b], [Fig. 7] et [Fig. 8] représentant différentes configurations dudit dispositif 1.

Le dispositif de conditionnement 1 de mottes végétales décrit en [Fig. 1] comporte un premier convoyeur 10 et un deuxième convoyeur 11 agencés pour coopérer ensemble.

Le premier convoyeur 10 fournit les mottes végétales. Le premier convoyeur 10 comporte une première extrémité 10a montée du côté du deuxième convoyeur 11 et une deuxième extrémité 10b opposée de sorte que l'ensemble de mottes végétales soit déplacé depuis la deuxième extrémité 10b vers la première extrémité 10a. Le premier convoyeur 10 permet un approvisionnement continu d'ensemble de mottes.

Le deuxième convoyeur 11 fourni des moyens de conditionnement 110. Le deuxième convoyeur 11 comporte une première portion 11a, une deuxième portion 11b et une troisième portion 11c positionnées en continuité les unes des autres. Lorsque le moyen de conditionnement 110 est fourni au niveau de la première portion 11a du deuxième convoyeur 11, celui-ci est en configuration vide. Le moyen de conditionnement 110 est une caisse comportant une pluralité de parois latérales. L'une desdites parois comporte un perçage.

Le moyen de conditionnement 110 est orienté dans une direction dans laquelle le perçage 110.1 est compatible avec la direction de déplacement de l'ensemble de mottes sur le premier convoyeur 10.

Le premier 10 et le deuxième convoyeur 11 sont agencés pour coopérer ensemble de sorte que la première extrémité 10a du premier convoyeur 10 est positionnée à proximité de la deuxième partie 11b du deuxième convoyeur 11.

Le dispositif 1 comporte un moyen de déplacement 12 comportant un organe de maintien 120 adapté pour maintenir le moyen de conditionnement 110 de sorte que l'orientation dudit moyen de conditionnement 110 soit identique dans tous ses déplacement et notamment que le perçage 110.1 de la première paroi latérale coopère avec l'ensemble de mottes. Le moyen de déplacement 12 comporte une unité de contrôle adaptée pour coordonner le mouvement du premier convoyeur 10, du deuxième convoyeur 11 et dudit moyen de déplacement 12.

Le moyen de conditionnement 110 se déplace de la première partie à la deuxième partie du deuxième convoyeur de manière à se retrouver sous le moyen de déplacement.

L'organe de maintien 120 comporte une mâchoire qui emprunte une configuration ouverte corrélée avec un déplacement du moyen de conditionnement 110 sur le deuxième convoyeur 11. L'organe de maintien 120 est notamment dans une configuration ouverte aux [Fig. 2a] et [Fig. 2b].

L'unité de contrôle présente dans le moyen de déplacement 12 contrôle le passage de la configuration ouverte à la configuration fermée de l'organe de maintien 120 de sorte que le moyen de conditionnement 110 est maintenu par l'organe de maintien 120 tel que décrit aux [Fig. 3a], [Fig. 3b] et [Fig. 3c].

Le moyen de déplacement 12 entraine le moyen de conditionnement 110 en configuration vide de la deuxième partie 11b du deuxième convoyeur 11 vers la première extrémité 10a du premier convoyeur 10 tel que décrit aux [Fig. 4a] et [Fig. 4b] et passe alors en configuration pleine.

Le déplacement du moyen de conditionnement 110 est réalisé de manière opposée au déplacement de l'ensemble de mottes de sorte que ledit ensemble de mottes rentre dans ledit moyen de conditionnement 110 par le perçage 110.1.

Le moyen de déplacement 12 comporte un organe de coupe 121 et un organe de retenue 122 qui sont à ce stade en position haute. L'organe de coupe est spécifiquement adapté pour sectionner l'ensemble de mottes à des dimensions correspondant au moyen de conditionnement 110. L'organe de coupe 121 est configuré pour coopérer avec une face interne de la paroi latérale du moyen de conditionnement comportant le perçage 110.1.

Le moyen de déplacement 12 comporte un système d'entrainement adapté pour déplacer simultanément l'organe de coupe 121 et l'organe de retenue 122 de la position haute à la position basse tel que décrit aux [Fig.Sa] et [Fig. 5b]. La face supérieure ouverte du moyen de conditionnement 110 permet d'accéder à son contenu.

Le moyen de déplacement 12 ramène ensuite le moyen de conditionnement 110 en configuration pleine depuis la première extrémité 10a du premier convoyeur 10 vers la deuxième partie 11b du deuxième convoyeur 11 tel que décrit aux [Fig. 6a] et [Fig. 6b].

Le système d'entrainement est alors activé de manière à déplacer simultanément l'organe de coupe 121 et l'organe de retenue 122 depuis la position basse vers la position haute. La remontée de l'organe de coupe 121 et de l'organe de retenue 122 entraine le passage de l'organe de maintien de la configuration fermée à la configuration ouverte tel que décrit en [Fig. 7] ce qui libère le moyen de conditionnement 110 qui se déplace alors sur la troisième partie du deuxième convoyeur comme décrit en [Fig. 8].

La description qui précède explique clairement comment l'invention permet d'atteindre les objectifs qu'elle s'est fixée, à savoir proposer un dispositif adapté pour limiter les manutentions manuelles de mise en caisse et facilitant le suivi de cadence de préparation des mottes, en proposant d'un moyen de déplacement comportant un organe de maintien adapté pour maintenir le moyen de conditionnement de sorte que l'orientation dudit moyen de conditionnement soit identique et de sorte que le perçage de la première paroi latérale coopère avec l'ensemble de mottes.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Dispositif de conditionnement (1) de mottes végétales comportant :
- Un premier convoyeur (10) et un deuxième convoyeur (11) agencés pour coopérer ensemble
∘ le premier convoyeur (10) étant adapté pour fournir au moins un ensemble de mottes végétales,
∘ le deuxième convoyeur (11) étant adapté pour fournir au moins un moyen de conditionnement (110) dont au moins une première paroi latérale comporte un perçage (110.1) orienté dans une direction compatible avec une direction de déplacement de l'ensemble de mottes sur le premier convoyeur (10) ;
- Un moyen de déplacement (12) comportant un organe de maintien (120) adapté pour maintenir le moyen de conditionnement (12) de sorte que l'orientation dudit moyen de conditionnement (12) soit identique
∘ dans un déplacement sur le deuxième convoyeur (11) et
∘ dans un déplacement depuis le deuxième convoyeur (11) vers le premier convoyeur (10) de sorte que le perçage (110.1) de la première paroi latérale coopère avec l'ensemble de mottes.

2. Dispositif de conditionnement (1) selon la revendication 1 **caractérisé en ce que** l'organe de maintien (120) comporte une mâchoire agencée pour emprunter une configuration ouverte et une configuration fermée dans laquelle ledit organe de maintien (120) coopère avec le moyen de conditionnement (110).

3. Dispositif de conditionnement (1) selon l'une des revendications précédentes, **caractérisé en ce que** le moyen de déplacement (12) comporte un organe de coupe (121) adapté pour couper l'ensemble de mottes.

4. Dispositif de conditionnement (1) selon la revendication 3, **caractérisé en ce que** le moyen de déplacement (12) comporte un organe de retenue (122) adapté pour coopérer avec l'organe de coupe (121).

5. Dispositif de conditionnement (1) selon la revendication 4, **caractérisé en ce que** le moyen de conditionnement (110) comporte une face supérieure ouverte adaptée pour coopérer avec un organe de retenue (122).

6. Dispositif de conditionnement (1) selon la revendication 5, **caractérisé en ce que** le moyen de déplacement (12) comporte un système d'entrainement adapté pour contrôler l'organe de coupe (121) et l'organe de retenue (122).

7. Dispositif de conditionnement (1) selon la revendication 6, **caractérisé en ce que** le système d'entrainement est configuré pour entraîner simultanément le déplacement de l'organe de coupe (121) et de l'organe de retenue (122) depuis une position haute vers une position basse.

8. Dispositif de conditionnement (1) selon la revendication 6, **caractérisé en ce que** le système d'entrainement est configuré pour entraîner successivement le déplacement de l'organe de coupe (121) puis le déplacement de l'organe de retenue (122) de la position haute vers la position basse.

9. Procédé de conditionnement de mottes végétales mis en oeuvre par un dispositif (1) selon l'une des revendications 1 à 8 **caractérisé en ce qu'**il comporte les étapes suivantes :
- Fourniture de l'ensemble de mottes végétales depuis le premier convoyeur (10),
- Fourniture du moyen de conditionnement (110) depuis le deuxième convoyeur (11) orienté dans une direction dans laquelle le perçage (110.1) est compatible avec la direction de déplacement de l'ensemble de mottes sur le premier convoyeur (10) ;
- Passage de l'organe de maintien (120) de la configuration ouverte à la configuration fermée.

10. Procédé de conditionnement selon la revendication 9 **caractérisé en ce qu'**il comporte une étape de déplacement du moyen de conditionnement (110) par le moyen de déplacement (12) depuis le deuxième convoyeur (11) vers le premier convoyeur (10) de sorte que l'ensemble de motte soit insérée dans ledit moyen de conditionnement (110) par le perçage (110.1).

11. Procédé de conditionnement selon l'une des revendications 9 ou 10 **caractérisé en ce qu'**il comporte une étape d'activation du système d'entrainement pour déplacer simultanément l'organe de coupe (121) et l'organe de retenue (122) de la position haute à la position basse.

12. Procédé de conditionnement selon l'une des revendications 9 ou 10 **caractérisé en ce qu'**il comporte une étape d'activation du système d'entrainement pour déplacer successivement l'organe de coupe (121) puis l'organe de retenue (122) de la position haute à la position basse.

13. Procédé de conditionnement selon l'une des revendications 9 à 12 **caractérisé en ce qu'**il comporte une étape de déplacement du moyen de conditionnement (110) du premier convoyeur (10) vers le deuxième convoyeur (11) par le moyen de déplacement (12).

14. Procédé de conditionnement selon l'une des revendications 9 à 13 **caractérisé en ce qu'**il comporte une étape de d'activation du système d'entrainement pour déplacer simultanément l'organe de coupe (121) et l'organe de retenue (122) de la position basse à la position haute.

15. Procédé de conditionnement selon l'une des revendications 9 à 14 **caractérisé en ce qu'**il comporte une étape de passage de l'organe de maintien (120) de la configuration fermée à la configuration ouverte.
